# EUROPÄISCHE PATENTANMELDUNG

(11) **EP 1 362 770 A2**
(43) Veröffentlichungstag der Anmeldung: **19.11.2003**
(21) Anmeldenummer: 03009947.7
(22) Anmeldetag: 30.04.2003
(51) Int. Cl.: B62D 29/00, B62D 25/06

(54) **Fahrzeug-Verbundkarosserieteil**

(30) Priorität: 15.05.2002 DE 10221582
(71) Anmelder: Webasto Vehicle Systems International GmbH, 82131 Stockdorf (DE)
(72) Erfinder: Dichtl, Matthias, 82547 Eurasburg (DE); Strohmayr, Peter, 82216 Gernlinden (DE)
(74) Vertreter: Bedenbecker, Markus

(57) **Zusammenfassung**

Es wird ein Fahrzeug-Karosserieteil, insbesondere ein Fahrzeugdach, vorgeschlagen, umfassend einen Materialverbund, der eine Außenhaut (16) und eine Trägerschicht (20) aufweist, auf der die Außenhaut (16) angeordnet ist. Um ein Durchschlagen von in der Trägerschicht (20) gebildeten Gasblasen an die Außenseite der Außenhaut (16) zu verhindern, ist zwischen der Außenhaut (16) und der Trägerschicht (20) mindestens eine Sperrschicht (18) angeordnet.

## Beschreibung

Die Erfindung betrifft ein Fahrzeug-Karosserieteil, insbesondere ein Fahrzeugdach, nach dem Oberbegriff des Patentanspruches 1.

Ein derartiges Fahrzeug-Karosserieteil ist aus der DE 199 46 008 A1 bekannt und als vorgefertigtes Dachmodul ausgebildet. Dieses Dachmodul umfaßt eine Außenhaut, die aus Aluminium, Stahl oder einer thermoplastischen Kunststoffolie besteht und mit einer Kunststoffschicht hinterfüttert ist, welche aus einem PUR-Schaum mit einer Armierung aus beispielsweise Glasfasern besteht. Insbesondere bei einer Außenhaut aus einer Kunststoffolie besteht bei diesem Dachmodul das Problem, daß sich gegebenenfalls in dem Trägerwerkstoff vorhandene Gaseinschlüsse unter Temperatureinfluß ausdehnen, was zu einer Blasenbildung führen kann, die sich an der Außenhaut abzeichnet, zumal die Festigkeit der Kunststoffolie bei hohen Temperaturen stark reduziert ist. Zu einer entsprechenden Blasenbildung kann es auch beim Hinterfüttern der Außenhaut mit der als Träger dienenden Kunststoffschicht kommen. Eine Blasenbildung in größerem Maßstab kann wegen der dann schlechten Oberflächenbeschaffenheit zur Unbrauchbarkeit des Dachmoduls führen.

Ferner ist aus der DE 100 19 199 A1 ein als Fahrzeugdach ausgebildetes Fahrzeug-Karosserieteil in Sandwich-Bauweise bekannt, das aus zwei Schichtpaketen besteht. Das bezogen auf den Fahrzeuginnenraum außenliegende Schichtpaket weist eine Außenhaut auf, die mit einer Hartschaumschicht hinterfüttert ist, und ist über eine Lochrasterfolie mit dem zweiten, aus einer Weichschaumschicht und einer unteren Deckschicht bestehenden Schichtpaket lösbar verbunden. Auch bei diesem Fahrzeug-Karosserieteil besteht das Problem einer Blasenbildung durch Gasreaktionen in der Hartschaumschicht, welche Blasen sich an der Oberfläche der Außenhaut abzeichnen können.

Der Erfindung liegt die Aufgabe zugrunde, ein Fahrzeug-Karosserieteil der einleitend genannten Gattung zu schaffen, bei dem die Gefahr einer sich an der Oberfläche der Außenhaut abzeichnenden Blasenbildung durch in dem Werkstoff der Trägerschicht auftretende Gaseinschlüsse oder dergleichen minimiert ist.

Diese Aufgabe ist erfindungsgemäß durch die Merkmale nach dem kennzeichnenden Teil des Patentanspruches 1 gelöst.

Der Kern der Erfindung liegt mithin darin, daß durch das Einbringen einer Sperrschicht zwischen der Außenhaut und der Trägerschicht ein Durchschlagen von sich in der Trägerschicht bildenden Gasblasen auf die Außenfläche der Außenhaut verhindert wird. Die Sperrschicht ist also eine Schutzschicht für die Außenhaut.

Das Fahrzeug-Karosserieteil nach der Erfindung ist bevorzugt als vormontiertes Dachmodul eines Personenkraftwagens ausgebildet, kann aber beispielsweise auch eine bewegte Fläche, wie ein Schiebedach eines Kraftfahrzeuges oder einzelne oder mehrere Lamellen eines Lamellen-Schiebedachs bilden.

Bei Ausbildung des Fahrzeug-Karosserieteils als vormontiertes Dachmodul umfaßt dieses als Außenhaut eine Kunststoffolie, eine Aluminium- oder eine Stahlschicht. Eine geeignete Kunststoffolie ist beispielsweise aus ABS, ASA, ASA-PC oder PC gefertigt und kann als tiefgezogener Vorformling ausgebildet sein.

Die Trägerschicht, die ein- oder mehrlagig und gegebenenfalls mit einem Distanzhalter ausgebildet sein kann, ist bevorzugt aus einem Polyurethan/Glasfaser-Gemisch nach einem Spritzverfahren oder auch mit einer Wabenstruktur gefertigt. Der Distanzhalter kann lagenartig ausgebildet und zwischen zwei Schichten aus Polyurethan und Glasfasern angeordnet sein sowie aus einer Kartonwabe, einer Kunststoffwabe oder auch aus einem Kunststoffschaum bestehen.

Die Abmessungen des Dachmoduls entsprechen im wesentlichen denjenigen eines Karosserierahmens, in den es in seinen Umfangsrandbereichen über eine Kleberaupe einklebbar ist. Ferner kann das Dachmodul mit üblicher Ausstattung, wie beispielsweise einem Schiebedach, einem Innenhimmel, Haltegriffen, Leuchten und dergleichen, versehen sein.

Die Sperrschicht ist bei einer bevorzugten Ausführungsform des Karosserieteils nach der Erfindung aus Polyurethan gefertigt und bildet damit bevorzugt ein sogenanntes PU-Coating, welches in einem Fertigungswerkzeug, in welches die Außenhaut eingespannt bzw. eingelegt ist, mittels eines Pinsels oder auch eines Roboters auf die bezogen auf den Fahrzeuginnenraum innenliegende Oberfläche der Außenhaut aufgebracht wird.

Das PU-Coating, das einen geringen Glasfaseranteil aufweisen kann, hat den Vorteil, daß es thixotropiert werden kann, so daß bei der Montage ein Zusammenlaufen des Coatings in Richtung der üblicherweise bei einem Fahrzeugdach vorliegenden Bombage unterbunden werden kann.

Des weiteren hat das PU-Coating den Vorteil, daß sich keine Glasfasern des Coatings oder auch der Trägerschicht an der Außenseite der Außenhaut abzeichnen und daß es elektromagnetisch leitend ist, so daß in dem Karosserieteil eine Antenne integriert werden kann.

Die Sperrschicht kann aber auch aus einer vorzugsweise spritzgegossenen, thermoplastischen Kunststoffschicht gebildet sein. Eine derartige Sperrschicht hat bei der Herstellung des Karosserieteils den Vorteil, daß sie als sehr homogene, ebene Schicht auf die Innenseite der Außenhaut aufgetragen werden kann.

Die Sperrschicht kann aber auch aus einer Aluminiumfolie bestehen, die bei der Herstellung des Karosserieteils in dem betreffenden Werkzeug zunächst auf die Innenseite der Außenhaut aufgebracht und dann mittels des Trägerwerkstoffs hinterfüttert wird.

Um eine sich gegebenenfalls an der Außenseite der Außenhaut abzeichnende Faltenbildung der Aluminiumfolie infolge einer bombierten Dachhaut zu verhindern, kann die Aluminiumfolie mit Schlitzen und/oder Aussparungen versehen oder auch mehrbahnig bzw. aus mehreren Teilstücken gebildet sein. Bei einer mehrbahnigen Ausbildung der Aluminiumfolie können sich die einzelnen Bahnen überlappen oder auch bündig nebeneinander angeordnet sein.

Die Aluminiumfolie kann selbstklebend ausgebildet oder auch mit einem Kleber beschichtet sein, der durch die beim Hinterfüttern mit dem Trägerwerkstoff auftretenden Prozeßtemperaturen zwischen 40 und 250 °C aktiviert wird.

Die Verwendung einer Aluminiumfolie als Sperrschicht hat ferner den Vorteil, daß ein durch unterschiedliche Temperaturausdehnungskoeffizienten der Außenhaut und des Trägerwerkstoffs auftretender Effekt, welcher Effekt dem sogenannten Bimetalleffekt gleicht und bei einer Temperaturbelastung zu Verformungen des Karosserieteils führen kann, verringert ist.

Fünf Ausführungsbeispiele des Gegenstandes nach der Erfindung sind in der Zeichnung schematisch vereinfacht dargestellt. Es zeigt
- Fig. 1: eine Teilansicht eines Personenkraftwagens mit einem Dachmodul;
- Fig. 2: einen Schnitt durch ein Dachmodul mit einer Sperrschicht aus einem thermoplastischen Kunststoff;
- Fig. 3: einen Schnitt durch ein Dachmodul mit einer Sperrschicht aus Polyurethan;
- Fig. 4: einen Schnitt durch ein Dachmodul mit einer Sperrschicht aus einer Aluminiumfolie;
- Fig. 5: eine Aufsicht auf das Dachmodul nach Fig. 4 während der Fertigung;
- Fig. 6: eine Aufsicht auf ein Dachmodul mit einer Sperrschicht aus einer bahnenförmig ausgebildeten Aluminiumfolie während der Fertigung; und
- Fig. 7: eine Aufsicht auf ein Dachmodul mit einer Sperrschicht aus einer Aluminiumfolie mit Ausnehmungen während der Fertigung.

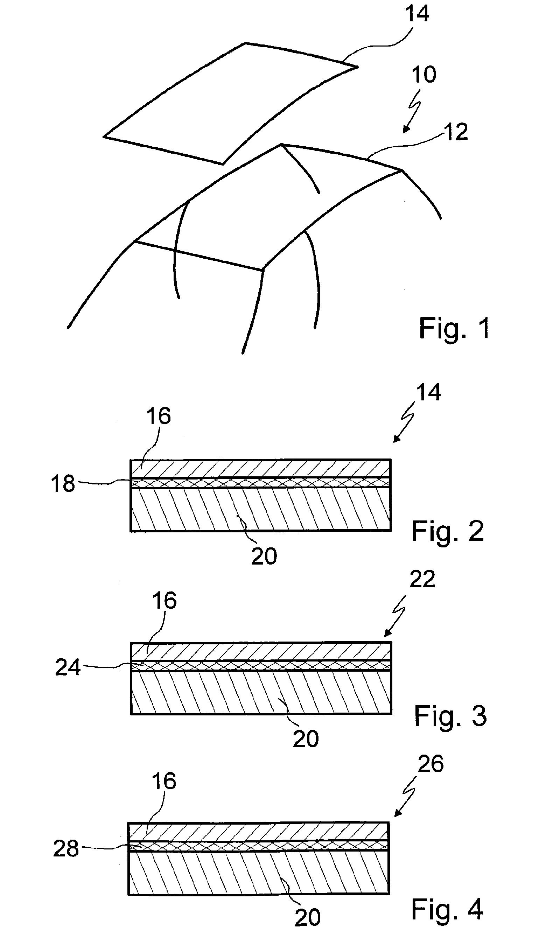

In Fig. 1 ist ein als Personenkraftwagen ausgebildetes Kraftfahrzeug 10 dargestellt, dessen Karosserie einen Dachrahmen 12 aufweist, in den ein erfindungsgemäß ausgebildetes, vormontiertes und bombiertes Dachmodul 14 einsetzbar ist, das einen Fahrzeuginnenraum überdeckt. Die Verbindung zwischen dem Dachmodul 14 und dem Dachrahmen 12 erfolgt über eine hier nicht näher dargestellte, umlaufende Kleberaupe.

In Fig. 2 ist ein Schnitt durch das in Fig. 1 dargestellte Dachmodul 14 gezeigt, welches mehrlagig aufgebaut ist und vor dem Einsetzen in den Dachrahmen 12 vorgefertigt ist.

Das Dachmodul 14 umfaßt eine aus Kunststoff, wie beispielsweise ABS, gefertigte Außenhaut 16, die eine Dicke zwischen 0,2 mm und 2,0 mm aufweist und als Tiefziehteil ausgebildet sein kann. Die Außenhaut 16 bildet die bezogen auf den Fahrzeuginnenraum außen liegende Oberfläche des Dachmoduls 14, d. h. die Dachfläche des Kraftfahrzeuges 10.

An der Unterseite bzw. Innenseite der Außenhaut 16 ist eine spritzgegossene Sperrschicht 18 aus einem thermoplastischen Kunststoff angeordnet, die eine Dicke zwischen 0,2 mm und 1,0 mm aufweist. Die Sperrschicht 18 ist wiederum mittels einer sogenannten Trägerschicht 20 hinterfüttert, welche eine Dicke zwischen 1 mm und 8 mm aufweist und aus einem Gemisch aus Polyurethan und Glasfasern gebildet ist. Die Trägerschicht 20 ist nach einem Spritzverfahren, beispielsweise nach einem sogenannten LFI(Long Fiber Injection)-Verfahren auf die Sperrschicht 18 aufgebracht. Alternativ kann die Trägerschicht 20 nach einem Spritzverfahren, bei dem eine Wabenstruktur und/oder eine Glasmatte eingesetzt wird, auf die Sperrschicht 18 aufgebracht sein.

An der dem Fahrzeuginnenraum zugewandten Seite kann die Trägerschicht 20 zur Ausbildung eines hier nicht näher dargestellten Dachhimmels mit einem textilen oder folienartigen Material beschichtet sein.

Die Sperrschicht 18 aus dem thermoplastischen Kunststoff bildet eine homogene, ebene Schicht, die ein Durchschlagen von gegebenenfalls in der Trägerschicht 20 gebildeten bzw. enthaltenen Luft- bzw. Gasblasen auf die Außenhaut 16 und deren Oberseite verhindert.

In Fig. 3 ist ein Schnitt durch eine alternative Ausführungsform eines Dachmoduls 22 dargestellt, welches sich von dem Ausführungsbeispiel nach Fig. 2 dadurch unterscheidet, daß es eine Sperrschicht 24 aufweist, die aus einem Polyurethan-Coating besteht und eine Dicke von etwa 0,5 mm aufweist. Entsprechend dem Ausführungsbeispiel nach Fig. 2 ist die Sperrschicht 24 zwischen der Außenhaut 16 und der Trägerschicht 20 angeordnet.

Die Sperrschicht 24 stellt ein System dar, das in der Regel ohne Glasfasern, im Einzelfall aber auch mit einem Glasfaseranteil ausgeführt sein kann.

In Fig. 4 ist eine dritte Ausführungsform eines Dachmoduls 26 dargestellt, dessen Aufbau wiederum im wesentlichen demjenigen des Dachmoduls nach Fig. 2 entspricht. Das Dachmodul 26 weist jedoch eine Sperrschicht 28 auf, die aus einer Aluminiumfolie mit einer Dicke zwischen 30 µm und 90 µm besteht und ebenfalls zwischen der aus einer Kunststoffolie 16 bestehenden Außenhaut und der aus einem Polyurethan/Glasfaser-Gemisch bestehenden Trägerschicht 20 angeordnet ist.

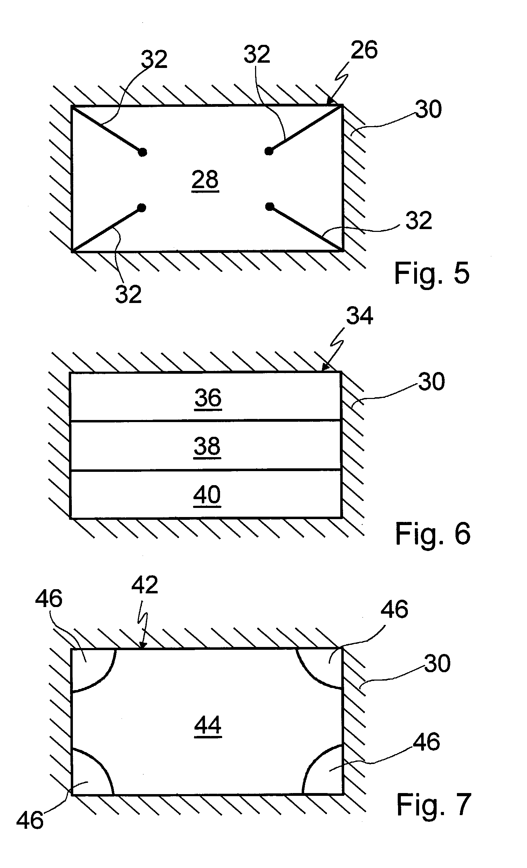

Die Aluminiumfolie 28 ist aus einer selbstklebenden Folie gebildet und wird bei der Montage des Dachmoduls 26 auf die Innenseite der Außenhaut 16 aufgeklebt. Hierzu wird, wie in Fig. 5 dargestellt, die Außenhaut 16 in einem Werkzeug 30 angeordnet, und zwar derart, daß deren Außenseite nach unten weist. Anschließend wird die Aluminiumfolie 28 auf die nach oben weisende Innenseite der Außenhaut 16 aufgeklebt.

Da das Dachmodul 26 bombiert ist, weist die Aluminiumfolie 28 zur Vermeidung einer Faltenbildung Schlitze 32 auf, die sich jeweils in den Eckbereichen in im wesentlichen diagonaler Richtung des im wesentlichen rechteckig ausgebildeten Dachmoduls 26 erstrecken.

In Fig. 6 ist eine alternative Ausführungsform eines Dachmoduls 34 mit einer Aluminiumfolie als Sperrschicht dargestellt, das wiederum in einem Fertigungswerkzeug 30 angeordnet ist und als Sperrschicht parallel verlaufende Aluminiumfolienbahnen 36, 38 und 40 aufweist, die wiederum aus selbstklebender Aluminiumfolie gebildet sind und auf die Innenseite der Außenhaut aufgeklebt sind. Durch die bahnenartige Ausbildung der Sperrschicht kann eine Faltenbildung verhindert werden. Die Bahnen 36 und 38 bzw. 38 und 40 überlappen sich in ihren Randbereichen.

In Fig. 7 ist ein weiteres Ausführungsbeispiel eines Dachmoduls 42 während der Fertigung in einem Werkzeug 30 dargestellt. Der Aufbau des Dachmoduls 42 entspricht im wesentlichen demjenigen des Dachmoduls nach Fig. 4, unterscheidet sich von diesem jedoch durch die Ausbildung der Sperrschicht. Die Sperrschicht des Dachmoduls 42 ist von einer selbstklebenden Aluminiumfolie 44 mit einer Stärke von 70 um gebildet, welche in den Eckbereichen Ausnehmungen 46 aufweist, die zur Verhinderung einer Faltenbildung infolge der bombierten Außenhaut dienen.

Bei den Ausführungsbeispielen nach den Figuren 4 bis 7 ist die Aluminiumfolie, die mit der Trägerschicht hinterfüttert wird, jeweils selbstklebend ausgebildet. Es ist aber auch denkbar, daß die Aluminiumfolie jeweils mit einem Kleber beschichtet ist, welcher durch die beim Hinterfüttern mit dem Trägermaterial auftretenden Prozeßtemperaturen, die in der Regel zwischen 100 °C und 120 °C liegen, aktiviert wird.

### Bezugszeichen

- 10: Kraftfahrzeug
- 12: Dachrahmen
- 14: Dachmodul
- 16: Außenhaut
- 18: Sperrschicht
- 20: Trägerschicht
- 22: Dachmodul
- 24: Sperrschicht
- 26: Dachmodul
- 28: Sperrschicht
- 30: Werkzeug
- 32: Schlitze
- 34: Dachmodul
- 36: Aluminiumfolienbahn
- 38: Aluminiumfolienbahn
- 40: Aluminiumfolienbahn
- 42: Dachmodul
- 44: Aluminiumfolie
- 46: Ausnehmungen

## Patentansprüche

1. Fahrzeug-Karosserieteil, insbesondere Fahrzeugdach, umfassend einen Materialverbund mit einer Außenhaut (16) und einer Trägerschicht (20), auf der die Außenhaut (16) angeordnet ist, **dadurch gekennzeichnet, daß** zwischen der Außenhaut (16) und der Trägerschicht (20) mindestens eine Sperrschicht (18; 24; 28; 36 bis 40; 44) angeordnet ist.

2. Fahrzeug-Karosserieteil nach Anspruch 1, **dadurch gekennzeichnet, daß** die Sperrschicht (24) aus einem Polyurethan umfassenden Werkstoff gebildet ist.

3. Fahrzeug-Karosserieteil nach Anspruch 1, **dadurch gekennzeichnet, daß** die Sperrschicht (18) aus einem thermoplastischen Kunststoff gebildet ist, der vorzugsweise spritzgegossen ist.

4. Fahrzeug-Karosserieteil nach Anspruch 1, **dadurch gekennzeichnet, daß** die Sperrschicht aus mindestens einer Aluminiumfolie (28; 36, 38, 40; 44) gebildet ist.

5. Fahrzeug-Karosserieteil nach Anspruch 4, **dadurch gekennzeichnet, daß** die Aluminiumfolie (28) Schlitze (32) aufweist.

6. Fahrzeug-Karosserieteil nach Anspruch 4 oder 5, **dadurch gekennzeichnet, daß** die Aluminiumfolie in Bahnen (36, 38, 40) ausgebildet ist.

7. Fahrzeug-Karosserieteil nach einem der Ansprüche 4 bis 6, **dadurch gekennzeichnet, daß** die Aluminiumfolie (44) Ausnehmungen (46) aufweist.

8. Fahrzeug-Karosserieteil nach einem der Ansprüche 4 bis 7, **dadurch gekennzeichnet, daß** die Aluminiumfolie (28; 36, 38, 40; 44) aus einer selbstklebenden Aluminiumfolie gebildet ist.

9. Fahrzeug-Karosserieteil nach einem der Ansprüche 4 bis 7, **dadurch gekennzeichnet, daß** die Aluminiumfolie aus einer Aluminiumfolie mit einer Beschichtung aus temperaturaktivierbaren Kleber gebildet ist.
